Europäisches Patentamt

(19) **European Patent Office**

**Office européen des brevets**

(11) Veröffentlichungsnummer: **0 000 798**
**B1**

(12) **EUROPÄISCHE PATENTSCHRIFT**

(45) Veröffentlichungstag der Patentschrift:
02.09.81

(51) Int. Cl.³: **C 08 G 18/80,** C 08 G 18/79

(21) Anmeldenummer: 78200117.6

(22) Anmeldetag: 25.07.78

(54) **Pulverförmige Polyurethanlacke.**

(30) Priorität: 06.08.77 DE 2735497

(43) Veröffentlichungstag der Anmeldung:
21.02.79 Patentblatt 79/4

(45) Bekanntmachung des Hinweises auf die Patenterteilung:
02.09.81 Patentblatt 81/35

(84) Benannte Vertragsstaaten:
BE CH DE FR GB LU NL SE

(56) Entgegenhaltungen:
DE-A-2 313 004

(73) Patentinhaber: **CHEMISCHE WERKE HÜLS AG,**
**Postfach 1320, D-4370 Marl 1 (DE)**

(72) Erfinder: **Gras, Rainer, Dr., An der Ziegelei 91,**
**D-4690 Herne 2 (DE)**
Erfinder: **Schmitt, Felix, Dr., Tiroler Weg 2,**
**D-4352 Herten-Langenbochum (DE)**
Erfinder: **Wolf, Elmar, Dr., Am Böckenbusch 3a,**
**D-4690 Herne 2 (DE)**

(74) Vertreter: **Steil, Hanna, Dipl.-Chem. et al,**
**RSP-PATENTE-PB 40 Postfach 2840 Holsterhauser**
**Strasse 160, D-4690 Herne 2 (DE)**

BUNDESDRUCKEREI BERLIN

## Pulverförmige Polyurethanlacke

Es ist bereits bekannt, Pulverlacke aus hydroxylgruppenhaltigen Polyestern, Polyacrylaten und Epoxidharzen und Polyisocyanaten, deren Isocyanatgruppen blockiert sind, auf dem Lacksektor zur elektrostatischen Applizierung durch Bespritzen oder Besprühen der Substrate und nachfolgende Härtung anzuwenden.

Als Blockierungsmittel für die Isocyanatgruppen hat sich nach schlechten Erfahrungen mit Phenol im Hinblick auf die Geruchsbelästigung und Blasenbildung insbesondere ε-Caprolactam durchgesetzt (DE-OS 19 57 483).

Als Polyisocyanat wird wegen einer Reihe von Vorteilen insbesondere 3-Isocyanatomethyl-3,5,5-trimethylcyclohexylisocyanat, im folgenden IPDI genannt, eingesetzt (DE-AS 21 05 777).

Polyurethan-Pulverlacke auf Basis von mit ε-Caprolactam-blockiertem IPDI zeichnen sich gegenüber Polyurethanpulverlacken auf anderer Polyisocyanatbasis insbesondere durch gute Wetterstabilität, Verlaufeigenschaften und Thermostabilität aus. Sie haben aber den Nachteil — verglichen z. B. mit Epoxidharzpulvern — daß die Härtungsbedingungen, d. h. die Härtungstemperatur und die Härtungszeit, relativ hoch liegen.

Es hat nicht an Versuchen gefehlt, diese Nachteile abzubauen, z. B. durch Zusatz von die Härtungszeiten reduzierenden Katalysatoren. Wegen technologischer Nachteile konnten sich derartige Vorschläge nicht durchsetzen.

Verglichen mit den Epoxidharzpulverlacken, aber auch anderen, ist bei den Polyurethanen das Gewichtsverhältnis von Harz (Polyester) zu Härter deutlich auf die Seite des Härters hin verschoben. Diese Tatsache belastet nicht nur die Wirtschaftlichkeit von Pulverlacken auf Basis dieser Harzgruppe, sondern erfordert eine spezielle Einstellung seitens der Produktionsbetriebe auf diese Verhältnisse.

Diesen Nachteilen kann man auf zweierlei Weise begegnen. Da im Falle dieser Harzgruppe ein stöchiometrisches Verhältnis von Harz/Härter für die Einstellung des optimalen Eigenschaftsbildes erforderlich ist, läßt sich theoretisch das Verhältnis Harz/Härter zugunsten des Harzes dadurch verschieben, daß man versucht, den Gehalt an vernetzenden Isocyanatgruppen zu erhöhen und/oder den Gehalt an OH-Gruppen auf der Harzseite zu reduzieren. Beschreitet man den ersten Weg, so stellt man fest, daß auf der Basis der heute verwendeten Isocyanat-Urethanhärter eine Erhöhung der NCO-Konzentration im Härter die Lagerstabilität der fertigen Pulverlacke stark negativ beeinflußt. Die Reduzierung der OH-Zahl der Polyolkomponente des Polyesters führt gewöhnlich zu einer Verringerung der Funktionalität der Polyolkomponente. Dadurch stellt sich eine Schwäche solcher Lacke bezüglich der Chemikalienbeständigkeit ein, die wünschenswerterweise durch eine höhere Funktionalität von der Härterseite ausgeglichen werden sollte.

Es wurde nun überraschend gefunden, daß Pulverlacke aus einerseits hydroxylgruppenhaltigen, makromolekularen Verbindungen, wie Polyestern, Polyacrylaten und Epoxidharzen, und ε-Caprolactam-blockierten Polyisocyanaten die obengenannten Nachteile nicht oder in sehr abgeschwächter Form besitzen, wenn sie als Polyisocyanat das Triisocyanatoisocyanurat aus 3-Isocyanatomethyl-3,5,5-trimethylcyclohexylisocyanat und gegebenenfalls Oligomere zusammen mit monomerem 3-Isocyanatomethyl-3,5,5-trimethylcyclohexylisocyanat enthalten.

Gegenstand der Erfindung sind daher pulverförmige Polyurethanlacke aus hydroxylgruppenhaltigen Polyestern, Polyacrylaten oder Epoxidharzen und ε-Caprolactam-blockierten Polyisocyanaten als Härtungskomponente, dadurch gekennzeichnet, daß als Polyisocyanatkomponente das Triisocyanatoisocyanurat des 3-Isocyanatomethyl-3,5,5-trimethylcyclohexylisocyanat und gegebenenfalls Oligomere zusammen mit monomerem 3-Isocyanatomethyl-3,5,5-trimethylcyclohexylisocyanat eingesetzt wird.

Dieses aliphatische Triisocyanatisocyanurat kann nach dem Verfahren der DE-OS 23 25 826 hergestellt werden. Ein weiter geeigneter Trimerisierungskatalysator ist auch in DE-OS 26 44 684 beschrieben. Die Trimerisierung kann in Substanz oder in inerten Lösungsmitteln vorgenommen werden. Zur Durchführung des Trimerisierungsverfahrens ist es wesentlich, die Reaktion bei einem bestimmten NCO-Gehalt der Mischung abzubrechen, und zwar vorzugsweise dann, wenn 30−60% der NCO-Gruppen unter Trimerisierung reagiert haben. Das nicht umgesetzte Isocyanat wird dann durch Dünnschichtdestillation vom Triisocyanurat abgetrennt. Das so zugängliche Triisocyanatoisocyanurat wird im Gemisch mit isocyanuratfreiem Diisocyanat zur Blockierung mit ε-Caprolactam eingesetzt. Der Zusatz des isocyanuratfreien Diisocyanats gestattet auf einfache Weise die Eigenschaften der Verfahrensprodukte, insbesondere ihren Schmelzpunkt in gewünschter Weise zu variieren.

Es ist besonders vorteilhaft, in situ hergestelltes Triisocyanatoisocyanuratgemisch, das u. a. noch andere Oligomere des Diisocyanats enthalten kann, direkt mit ε-Caprolactam im Gemisch mit dem monomeren Diisocyanat einzusetzen.

Der Einsatz von Triisocyanatoisocyanurat und monomerem Diisocyanat erfolgt im Gewichtsverhältnis von etwa 80 : 20 bis 30 : 70.

Auch das nicht vollständig mit ε-Caprolactam blockierte Isocyanuratgruppen aufweisende Diisocyanat ist zur Herstellung der erfindungsgemäßen pulverförmigen Überzugsmittel geeignet, jedoch darf nicht mehr als eine Isocyanatgruppe pro Molekül frei vorliegen, da sonst bereits beim

0 000 798

Vermischen der Komponenten Vernetzung eintritt.

Die zu verwendenden hydroxylgruppenhaltigen Verbindungen enthalten als wesentliche Bestandteile einkondensiert:

1. cyclische Polycarbonsäuren, wie Phthalsäure, Isophthalsäure, Terephthalsäure, Benzol-1,3,5-tricarbonsäure, Trimellithsäureanhydrid, Dimethylterephthalat (DMT);
2. Diole, z. B. Glykol, 1,2-Propandiol, 1,3-Butandiol, 1,4-Butandiol, 2,2-Dimethylpropandiol, Hexandiol-1,6, 4,4'-Dihydroxydicyclohexylpropan-2,2, Cyclohexandiol, Diäthylenglykol und bisäthoxy-liertes 4,4'-Dihydroxydiphenyl-2,2-propan, 1,4-Dihydroxymethylcyclohexan;
3. Polyole, wie Glycerin, Hexantriol, Pentaerythrit, Trimethylolpropan, Trimethyloläthan.

Anteilmäßig können die Polyester auch monofunktionelle Carbonsäuren, z. B. Benzoesäure, sowie acyclische Polycarbonsäuren, wie Adipinsäure, 2,4,4-(2,2,4)-Trimethyladipinsäure, Sebacinsäure, Dodecandicarbonsäure. Die Polyester werden in an sich bekannter Weise durch Verestern oder Umestern, gegebenenfalls in Gegenwart üblicher Katalysatoren, hergestellt, wobei durch geeignete Wahl des COOH/OH-Verhältnisses Endprodukte erhalten werden, deren Hydroxylzahl zwischen etwa 40 und 240, bevorzugt zwischen etwa 40 und etwa 150, liegt.

Die Erweichungstemperaturen der Polyester müssen so niedrig liegen, daß sie sich bei Temperaturen zwischen etwa 70°C und 120°C mit den zur Herstellung der erfindungsgemäßen Überzugsmittel notwendigen Zusätzen verarbeiten lassen. Die Erweichungspunkte müssen andererseits so hoch liegen, daß die aus den Polyestern gewonnenen erfindungsgemäßen Überzugsmittel zu nicht klumpenden, frei fließenden Pulvern mit einer Teilchengröße von etwa 20 bis etwa 120 μm vermahlen werden können.

Die erfindungsgemäßen Überzugsmittel können in geeigneten Mischaggregaten, z. B. in Rührkesseln oder Mischschnecken, hergestellt werden. Auch übliche Zuschlagstoffe, wie Pigmente, Verlaufmittel, Weichmacher, Füllstoffe und Katalysatoren, können ebenfalls in einfacher Weise ohne Verwendung von Lösungsmitteln zugesetzt werden. Die pulverförmigen Überzugsmittel lassen sich leicht in üblicher Weise, d. h. zum Beispiel in einem Wirbelbett oder durch elektrostatisches Aufsprühen, verarbeiten; durch Erhitzen auf Temperaturen oberhalb etwa 150°C, vorzugsweise zwischen etwa 160 und 200°C, werden Überzüge mit hervorragenden Eigenschaften erhalten.

Die technischen Vorteile der erfindungsgemäßen Pulverlacke aus hydroxylgruppenhaltigen Harzen und ε-Caprolactam-blockierten, Isocyanuratstrukturen enthaltenden Polyisocyanaten gegenüber dem Stand der Technik sind folgende:

1. Höherer Gehalt an NCO-Gruppen bei vergleichbarer oder verbesserter Lagerstabilität;
2. Erhöhung der Vernetzungsdichte im gehärteten Polyurethan und damit bessere Anpassung an Polyole mit niedriger OH-Zahl;
3. Reduzierung der Härtungszeiten;
4. Reduzierung der minimal notwendigen Härtungstemperaturen.

Beispiele

A. Herstellung der Polyester

A-1 6,75 Mol (1323 g) Dimethylterephthalat, 2,25 Mol (373,5 g) Terephthalsäure, 6 Mol (624 g) 2,2-Dimethylpropandiol-1,3, 1 Mol (134 g) Trimethylolpropan und 3,0 Mol (432 g) 1,4-Dimethylolcyclohexan wurden in einem 5 l Glaskolben zusammengegeben und mit Hilfe eines Ölbades erwärmt. Nachdem die Stoffe zum größten Teil aufgeschmolzen waren, wurde bei einer Temperatur von 160°C 0,1 Gew.-% Dibutylzinnoxid als Veresterungskatalysator zugesetzt. Innerhalb von 3 h wurde die Sumpftemperatur langsam auf 185°C erhöht. Die weitere Temperaturerhöhung auf maximal 230°C Sumpftemperatur erfolgte innerhalb von weiteren 8 h, wobei die Aufheizgeschwindigkeit sich an der Methanol-/Wasserabscheidung orientierte. Der Polyester wurde anschließend auf ca. 210°C abgekühlt und durch Evakuierung bei ca. 1 mm Hg weitgehend von flüchtigen Anteilen befreit. Während der gesamten Kondensationszeit wurde das Sumpfprodukt verhalten gerührt. Ein Stickstoffstrom von ca. 30 l/h sorgte für die bessere Austragung von Methanol und Wasser.

Physikalische und chemische Daten:

| | |
|---|---|
| OH-Zahl | 48 mg KOH/g |
| Säurezahl | 3,5 mg KOH/g |
| Schmelzpunkt (Kofler) | 85−88°C |
| Glasumwandlungstemperatur/DTA | 52−62°C |
| Viskosität bei 160°C | ca. $7 \cdot 10^{-2}$ m² · sec$^{-1}$ (70 000 cSt) |

3

A-2 9 Mol (1746 g) Dimethylterephthalat, 4 Mol (416 g) 2,2-Dimethylpropandiol-1,3, 3,75 Mol (540 g) 1,4-Dimethylolcyclohexan und 2,5 Mol (335 g) Trimethylolpropan wurden, wie in A-1 beschrieben, unter der katalytischen Einwirkung von 0,05 Gew.-% Dibutylzinnoxid der Veresterung unterworfen. Die erste Methanolabspaltung trat bei ca. 170°C Sumpftemperatur auf. Die Umesterung war nach ca. 14 h abgeschlossen, wobei bei einer maximalen Temperatur in der Schlußphase von 220°C umgeestert wurde.

Nach der Vakuumbehandlung (siehe A-1) und dem Abkühlen wurden die folgenden chemischen und physikalischen Daten ermittelt:

| | |
|---|---|
| OH-Zahl | 100 mg KOH/g |
| Säurezahl | <1 mg KOH/g |
| Schmelzpunkt (Kofler) | 85 – 91°C |
| Glasumwandlungstemperatur/DTA | 42 – 54°C |
| Viskosität bei 160°C | ca. $1 \cdot 9 \cdot 10^{-2}$ m$^2$ · sec$^{-1}$ (19 000 cSt) |

### B. Herstellung des Triisocyanatoisocyanurat/Isocyanat-Gemisches

B-1 100 Gew.-Teile 3-Isocyanatomethyl-3,5,5-trimethylcyclohexylisocyanat (IPDI) wurden mit 0,75 Gew.-Teilen Triäthylamin, 0,5 Gew.-Teilen Äthylenimin versetzt und auf 60°C erwärmt. Nach 3 h setzte die Trimerisierung unter Wärmeentwicklung ein. Durch geeignete Kühlung wurde die Temperatur des Reaktionsmediums auf maximal 105°C gehalten. Nach 75 min betrug die Temperatur des Reaktionsmediums wieder 60°C. Der NCO-Gehalt betrug 28,5%. Dieses Gemisch aus trimerisiertem und monomeren IPDI wurde einer Aufarbeitung in einem Dünnschichtverdampfer unterworfen. Das weitgehend von monomerem IPDI befreite Oligomerengemisch wies einen NCO-Gehalt von 18,0% auf und enthielt noch 1% monomeres IPDI.

B-2 100 Gew.-Teile IPDI wurden mit 0,5 Gew.-Teilen eines Katalysatorsystems aus 2 Gew.-Teilen Propylenoxid-1,2 und 1 Gew.-Teil 1,4-Diazabicyclooctan-(2,2,2) 3 h bei 120°C erhitzt. Während dieser Zeit fiel der NCO-Gehalt von 37,8% (100% IPDI) auf 28,4% (50% IPDI-Umsatz). Zur Desaktivierung des Katalysators wurde das Reaktionsgemisch auf 40°C abgekühlt und bei dieser Temperatur 1/2 h mit Stickstoff gestrippt. Dabei veränderte sich der NCO-Gehalt des Reaktionsgemisches noch geringfügig auf 28,2%.

B-3 100 Gew.-Teile IPDI wurden mit 0,75 Gew.-Teilen eines Katalysatorsystems aus 2 Gew.-Teilen Propylenoxid und 1 Gew.-Teil 1,4-Diazabicyclooctan-(2,2,2) 2 h bei 120°C erhitzt. In dieser Zeit fiel der NCO-Gehalt von 37,8% auf 29,4%. Zur Desaktivierung des Katalysators wurde bei 120°C und 3999 Pa (30 Torr) 15 Minuten evakuiert. Während dieser Zeit veränderte sich der NCO-Gehalt des Reaktionsgemisches auf 27%.

### C. Blockierte Isocyanatkomponente

C-1 In einem 2 l Planschliffkolben wurde das feste trimerisierte IPDI nach B-1 bei Temperaturen von 110 – 120°C in monomerem IPDI unter Rühren gelöst. Die Lösung wurde anschließend auf 75°C abgekühlt und das geschmolzene ε-Caprolactam zugegeben. Innerhalb von 10 Minuten stieg die Temperatur im Reaktionsmedium auf ca. 150°C durch die exotherme Additionsreaktion an. Nachdem die Temperatur auf ca. 110°C abgefallen war, wurde zur Vervollständigung der Reaktion noch 1 h bei 100 – 110°C getempert.

Die Zusammensetzung und die chemischen und physikalischen Daten der Härter (blockierte Polyisocyanate) C-1.1 und C-1.2 sind in der Tabelle 1 zusammengefaßt.

Tabelle 1

Zusammensetzung, chemische und physikalische Daten verschiedener ε-Caprolactam blockierter Isocyanathärter auf Basis von IPDI und Isocyanurat (C-1.1 und C-1.2)

| | Zusammensetzung | | | Chemische und physikalische Daten | | | |
|---|---|---|---|---|---|---|---|
| | IPDI | Iso-cyanurat | ε-Capro-lactam | lat. NCO-Gehalt | freier NCO-Geh. | Schmelz-punkt (Kofler) | Glasum-wandl.-temp. (DTA) |
| Härter C-1.1 | 19,8% | 40,4% | 39,8% | 14,8% | 0,4% | 105−117°C | 54−77°C |
| Härter C-1.2 | 37,2% | 16,8% | 46,0% | 17,1% | 0,6% | 66−75°C | 34−54°C |

C-2 Zu jeweils 100 Gew.-Teilen des nach B-2 und B-3 hergestellten Isocyanatoisocyanurat-Gemisches wurden bei 100°C 76,5 bzw. 72,6 Gew.-Teile ε-Caprolactam portionsweise so zugegeben, daß die Reaktionstemperatur nicht über 120°C anstieg. Zur Vervollständigung der Reaktion wurde das Reaktionsgemisch noch 2 h bei 120°C gehalten.
Die Zusammensetzung und die chemischen und physikalischen Daten der Härter C-2.1 und C-2.2 sind in der Tabelle 2 zusammengefaßt.

Tabelle 2

Zusammensetzung, chemische und physikalische Daten verschiedener ε-Caprolactam blockierter Isocyanathärter auf Basis von IPDI und Isocyanurat (C-2.1 und C-2.2)

| | Zusammensetzung | | | Chemische und physikalische Daten | | | |
|---|---|---|---|---|---|---|---|
| | IPDI | Iso-cyanurat | ε-Capro-lactam | lat. NCO-Gehalt | freier NCO-Geh. | Schmelz-punkt (Kofler) | Glasum-wandl.-temp. (DTA) |
| Härter C-2.1 (nach B-3) | 24,8% | 33,7% | 41,5% | 15,4% | 0,5% | 85−92°C | 46−60°C |
| Härter C-2.2 (nach B-2) | 29,7% | 27,0% | 43,3% | 16,0% | 0,7% | 78−83°C | 44−55°C |

C-3 — Vergleich

12 Mol (2664 g) monomeres IPDI und 6 Mol Diäthylenglykol (636 g) wurden in einem geeigneten Rührkolben gemischt und langsam auf ca. 70°C erwärmt. Bei dieser Temperatur setzte unter erheblicher Wärmetönung die Addition des Isocyanates an das Diol ein. Das Reaktionsgefäß wurde während der Addition im Eisbad gekühlt, so daß die Temperatur des Reaktionsgemisches nur auf ca. 100°C anstieg. Anschließend wurde noch 2 h bei 100°C zur Vervollständigung der Reaktion nachgeheizt. Der NCO-Gehalt betrug dann 15,1%.
Nun wurde auf 80°C abgekühlt und die dem Gehalt an Isocyanat stöchiometrische Menge ε-Caprolactam zugegeben. Durch die ebenfalls exotherme Reaktion stieg die Temperatur auf 105°C an. Die hochviskose Schmelze wurde noch 5 h bei 100°C nachbehandelt und dann auf Raumtemperatur abgekühlt. Der nahezu farblose Feststoff hatte einen Erweichungspunkt von 83°C und einen NCO-Gehalt von 0,3%.

Beispiel 1 — Polyurethan-Pulverlacke

Die Herstellung des Pulverlackes erfolgte in der dem Stand der Technik entsprechenden Weise. Sie soll deshalb nur kurz beschrieben werden.

0 000 798

Die Zusammensetzung entsprach der folgenden Rezeptur:

52,5% Polyester A-1
12,4% Härter C-2.1
34,6% Weißpigment, TiO$_2$, Kronos RN 57 P®
0,5% lackverträgliches Polyacrylat, Acronal 4 F®

Zuerst wurde ein Masterbatch des Verlaufmittels im Polyester hergestellt. Masterbatch, Polyester, Härter und Pigment wurden in einem Feststoffmischer innig vermengt und anschließend bei einer Massetemperatur von 95 – 100° C extrudiert. Die erstarrte Schmelze wurde auf eine Korngröße < 100 μ gemahlen, und der Pulverlack elektrostatisch auf 1 mm Stahlprüfbleche appliziert.

Die Lacke wurden unter verschiedenen Härtungsbedingungen eingebrannt und nach 24 h einer lacktechnischen Abprüfung unterworfen.

Bei dieser Art von Systemen ist die Elastizität, die meßtechnisch durch die Erichsentiefung erfaßt wird, ein guter Parameter für die Beurteilung des Grades der Aushärtung.

Erklärung der in den Tabellen 3–8 benutzten Abkürzungen

SD          = Schichtstärke in μm
HK          = Härte nach König in sec (DIN 53 157)
HB          = Härte nach Buchholz (DIN 53 153)
GS          = Gitterschnitt (DIN 53 151)
KS          = Kugelschlag in (inch · lb), cm · kg
ET          = Tiefung nach Erichsen in mm (DIN 53 156)
GG          = Glanz nach Gardner (ASTM-D-523)
KS indirekt = Kugelschlag indirekt in (inch · lb), cm · kg

Tabelle 3

Prüfergebnisse der Pulverlacke Beispiel 1

| Härtungs-bedingung | SD | HK | GS | KS | | GG$_{20}$ | GG$_{45}$ | GG$_{60}$ | ET |
|---|---|---|---|---|---|---|---|---|---|
| 200°C, 20′ | 50–70 | 183 | 0 | (80) | 92,2 | 68 | 61 | 97 | 10,4 |
| 15′ | 50–60 | 183 | 0 | (80) | 92,2 | 68 | 61 | 98 | 10,8 |
| 12′ | 50–60 | 187 | 0 | (80) | 92,2 | 67 | 60 | 97 | 11,2 |
| 10′ | 50–60 | 185 | 0 | (80) | 92,2 | 65 | 60 | 96 | 9,4 |
| 180°C, 30′ | 70–80 | 182 | 0 | (60) | 69 | 69 | 60 | 94 | 11,1 |
| 25′ | 60–70 | 190 | 0 | (80) | 92,2 | 71 | 58 | 96 | 11,7 |
| 20′ | 70–80 | 192 | 0 | (50) | 57,5 | 71 | 58 | 97 | 11,6 |
| 15′ | 70–80 | 197 | 0 | (60) | 69 | 51 | 59 | 97 | 8,0 |
| 10′ | 60–80 | 195 | 0 | (40) | 47 | 61 | 60 | 96 | 1,9 |
| 170°C 30′ | 60–70 | 187 | 0 | (50) | 57,5 | 60 | 61 | 97 | 8,7 |
| 20′ | 60–70 | 188 | 0 | (40) | 47 | 60 | 61 | 95 | 5,1 |

Beispiel 2 – Vergleichsbeispiel

In diesem Beispiel werden zwei Polyurethan-Pulverlacke beschrieben. Die Ergebnisse machen die Unterschiede zwischen den erfindungsgemäßen Lacken und den Überzügen auf der Basis der

6

Isocyanaturethanaddukte deutlich.

Mit der im Beispiel 1 beschriebenen Technologie wurden Pulverlacke der folgenden Rezepturen hergestellt und auf 1 mm Stahlblechen appliziert.

Rezeptur I — Vergleich:

    38,0% Polyester A-2
    27,5% Härter C-3
    34,0% Weißpigment, TiO$_2$, Kronos RN 57 P®
     0,5% lackverträgliches Polyacrylat, Acronal 4 F®

Rezeptur II — Erfindung

    44,1% Polyester A-2
    22,0% Härter C-2.1
    33,4% Weißpigment, TiO$_2$, Kronos RN 57 P®
     0,5% lackverträgliches Polyacrylat, Acronal 4 F®

Tabelle 4

Prüfergebnisse des Pulverlackes Beispiel 2, Rezeptur I (Vergleich)

| Härtungs-bedingung | SD | HK | GS | KS | GG$_{20}$ | GG$_{45}$ | GG$_{60}$ | ET |
|---|---|---|---|---|---|---|---|---|
| 200°C, 20′ | 40−60 | 185 | 0 | (60) 69 | 59 | 56 | 83 | 8,1 |
| 15′ | 40−60 | 189 | 0 | (70) 80,5 | 62 | 54 | 84 | 4,0 |
| 12′ | 50−60 | 183 | 0 | (70) 80,5 | 53 | 55 | 84 | 5,3 |
| 10′ | 50−60 | 184 | 0 | (60) 69 | 57 | 56 | 85 | 3,5 |
| 8′ | 50−60 | 184 | 0 | (30) 34,6 | 55 | 55 | 86 | 2,5 |
| 180°C, 30′ | 60−70 | 189 | 0 | (70) 80,5 | 66 | 59 | 84 | 4,1 |
| 25′ | 60−70 | 197 | 0 | (50) 57,5 | 64 | 55 | 92 | 3,0 |
| 20′ | 60−80 | 188 | 0 | (40) 47 | 53 | 55 | 91 | 1,7 |
| 15′ | 50−70 | 194 | 0 | (40) 47 | 67 | 52 | 89 | 1,8 |
| 10′ | 50−70 | 194 | 0 | (20) 23 | 58 | 55 | 91 | 0,5 |
| 170°C, 30′ | 40−60 | 183 | 0 | (50) 57,5 | 55 | 56 | 90 | 2,5 |
| 20′ | 50−70 | 185 | 0 | (10) 11,5 | 56 | 58 | 89 | 0,5 |

Tabelle 5

Prüfergebnisse des Pulverlackes Beispiel 2, Rezeptur II (Erfindung)

| Härtungs-bedingung | SD | HK | GS | KS | | GG$_{20}$ | GG$_{45}$ | GG$_{60}$ | ET |
|---|---|---|---|---|---|---|---|---|---|
| 200°C, 20' | 50−60 | 194 | 0 | (80) | 92,2 | 70 | 57 | 95 | 10,1 |
| 15' | 50−70 | 196 | 0 | (50) | 57,5 | 76 | 57 | 97 | 7,5 |
| 12' | 50−70 | 198 | 0 | (50) | 57,5 | 59 | 58 | 97 | 6,8 |
| 10' | 50−60 | 195 | 0 | (70) | 80,5 | 72 | 59 | 95 | 9,7 |
| 8' | 50−60 | 190 | 0 | (70) | 80,5 | 70 | 58 | 94 | 10,1 |
| 180°C, 30' | 60−70 | 197 | 0 | (60) | 69 | 74 | 59 | 82 | 6,8 |
| 25' | 60−70 | 206 | 0 | (50) | 57,5 | 77 | 58 | 78 | 7,8 |
| 20' | 60−70 | 204 | 0 | (40) | 47 | 73 | 59 | 80 | 5,8−8,6 |
| 15' | 50−70 | 208 | 0 | (30) | 34,6 | 73 | 59 | 83 | 5,5 |
| 10' | 60−70 | 205 | 0 | (10) | 11,5 | 78 | 60 | 85 | 1,0 |
| 170°C, 30' | 60−70 | 200 | 0 | (30) | 34,6 | 75 | 59 | 85 | 5,0−10,0 |
| 20' | 60−80 | 205 | 0 | (20) | 23 | 75 | 58 | 88 | 3,0 |

## Beispiel 3 − Polyurethan-Pulverlack

Mit der in Beispiel 1 beschriebenen Technologie wurde ein Polyurethan-Pulverlack der nachstehenden Formulierung hergestellt, auf 1 mm Stahlblech appliziert und unter verschiedenen Bedingungen gehärtet.

Rezeptur:

45,3% Polyester A-2
20,2% Härter C-1.2
34,0% Weißpigment, TiO$_2$, Kronos RN 57 P®
0,5% lackverträgliches Polyacrylat, Acronal 4 F®

Tabelle 6

Prüfergebnisse des Pulverlackes Beispiel 3

| Härtungs-bedingung | SD | HK | GS | KS | | GG$_{20}$ | GG$_{45}$ | GG$_{60}$ | ET |
|---|---|---|---|---|---|---|---|---|---|
| 200°C, 15' | 50−60 | 190 | 0 | (80) | 92,2 | 75 | 62 | 99 | 9,7 |
| 12' | 50−60 | 190 | 0 | (80) | 92,2 | 76 | 61 | 98 | 10,0 |
| 10' | 50−60 | 186 | 0 | (50) | 57,5 | 75 | 61 | 99 | 7,0−9,4 |
| 8' | 50−60 | 189 | 0 | (60) | 69 | 75 | 61 | 99 | 5,0−6,0 |
| 180°C, 20' | 50−60 | 202 | 0 | (70) | 80,5 | 85 | 61 | 95 | 9,1 |
| 15' | 50−60 | 195 | 0 | (40) | 47 | 83 | 60 | 99 | 4,5 |
| 12' | 50−60 | 195 | 0 | (20) | 23 | 83 | 60 | 99 | 0,8 |
| 10' | 50−60 | 196 | 0 | (20) | 23 | 77 | 62 | 99 | 0,7 |
| 170°C, 30' | 50−60 | 195 | 0 | (80) | 92,2 | 79 | 59 | 98 | 7,0−9,7 |
| 20' | 50−60 | 196 | 0 | (70) | 80,5 | 78 | 58 | 97 | 7,0 |

### Beispiel 4 — Klarlack

100 Gew.-Teile des Polyesters A-2 wurden mit 46,8 Gew.-Teilen des mit $\varepsilon$-Caprolactam blockierten Isocyanat-isocyanurat-Gemisches des IPDI, hergestellt nach C-2.2, und 0,73 Gew.-Teilen Silikonöl in der Schmelze bei Temperaturen von 120—140°C mit einem Intensivrührer homogenisiert. Nach dem Erkalten wurde die homogene Schmelze gebrochen und anschließend mit einer Stiftmühle auf eine Korngröße <100 μ gemahlen. Das so hergestellte Klarlack-Pulver wurde mit einer elektrischen Pulverspritzanlage bei 60 kV auf mit Zinkphosphat geprimerte Eisenbleche appliziert und in einem Umlufttrockenschrank bei Temperaturen zwischen 180 und 200°C eingebrannt.

Tabelle 7

Prüfergebnisse des Klarlackes Beispiel 4

| Härtungs-bedingung | SD | HK | HB | ET | GS | KS indirekt |
|---|---|---|---|---|---|---|
| 200°C, 15' | 30−50 | 204 | 125 | 10,2 | 0 | (>82) >94 |
| 190°C, 20' | 40−60 | 200 | 125 | 10,0 | 0 | (>82) >94 |
| 15' | 30−50 | 198 | 111 | 9,5 | 0 | (>82) >94 |
| 180°C, 20' | 40−60 | 195 | 125 | 9,8 | 0 | (>82) >94 |

### Beispiel 5 — Klarlack

Der Polyester A-2 wurde mit dem in C-2.1 beschriebenen Härter in äquivalenter Menge umgesetzt und, wie in Beispiel 4 beschrieben, hergestellt.

Rezeptur:

100,00 Gew.-Teile Polyester A-2
48,00 Gew.-Teile blockiertes Isocyanatisocyanurat nach C-2.1
0,74 Gew.-Teile Silikonöl OL

Der Klarlack wurde, wie in Beispiel 4 beschrieben, appliziert und im Umlufttrockenschrank zwischen 180 und 200° C eingebrannt.

Tabelle 8

Prüfergebnisse des Klarlackes Beispiel 5

| Härtungs-bedingungen | SD | HK | HB | ET | GS | KS indirekt |
|---|---|---|---|---|---|---|
| 200°C, 15′ | 35−50 | 202 | 111 | 10,4 | 0 | (>82) >94 |
| 190°C, 20′ | 35−60 | 200 | 125 | 10,2 | 0 | (>82) >94 |
| 15′ | 30−50 | 199 | 125 | 9,9 | 0 | (>82) >94 |
| 180°C, 20′ | 40−55 | 197 | 125 | 9,7 | 0 | (>82) >94 |

**Patentanspruch**

Pulverförmige Polyurethanlacke aus hydroxylgruppenhaltigen Polyestern, Polyacrylaten oder Epoxidharzen und ε-Caprolactam-blockierten Polyisocyanaten, dadurch gekennzeichnet, daß als Polyisocyanatkomponente das Triisocyanatoisocyanurat des 3-Isocyanatomethyl-3,5,5-trimethylcyclohexylisocyanat und gegebenenfalls Oligomere zusammen mit monomerem 3-Isocyanatomethyl-3,5,5-trimethylcyclohexylisocyanat eingesetzt wird und das Gewichtsverhältnis von Triisocyanatoisocyanurat zu monomerem Diisocyanat etwa 80 : 20 bis 30 : 70 beträgt.

**Claim**

Powdery polyurethane lacquers from hydroxy group-containing polyesters, polyacrylates or epoxy resins and ε-caprolactam-blocked polyisocyanates, wherein said polyisocyanate component is the triisocyanatoisocyanurate of 3-isocyanatomethyl-3,5,5-trimethyl-cyclohexylisocyanate and, optionally other oligomers thereof together with monomeric 3-isocyanatomethyl-3,5,5-trimethylcyclohexylisocyanate, and wherein the weight ratio of triisocyanatoisocyanurate to monomeric diisocyanate is between 80 : 20 to 30 : 70.

**Revendication**

Vernis en poudre de polyuréthane, constitués de polyester, polyacrylate ou résine époxy, contenant des groupes hydroxyl, et de polyisocyanates bloqués par ε-caprolactame, vernis caractérisés en ce que l'on met en oeuvre, comme composant polyisocyanate, le triisocyanatoisocyanurate de 3-isocyanatométhyl-3,5,5-triméthylcyclohexylisocyanate, et éventuellement des oligomères en commun avec le monomère de 3-isocyanatométhyl-3,5,5-triméthylcyclohexylisocyanate, et que le rapport en poids entre le triisocyanatoisocyanurate et le monomère diisocyanate se situe entre 80 : 20 et 30 : 70.